(19) Europäisches Patentamt / European Patent Office / Office européen des brevets

(11) **EP 4 407 510 A1**

(12) **EUROPEAN PATENT APPLICATION**
published in accordance with Art. 153(4) EPC

(43) Date of publication:
**31.07.2024 Bulletin 2024/31**

(21) Application number: **22871847.4**

(22) Date of filing: **13.09.2022**

(51) International Patent Classification (IPC):
**G06K 7/10** $^{(2006.01)}$

(86) International application number:
**PCT/CN2022/118413**

(87) International publication number:
**WO 2023/045799 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2021 CN 202111116898**

(71) Applicant: **HEMA (CHINA) CO., LTD.**
**Shanghai 200135 (CN)**

(72) Inventors:
• **SONG, Enliang**
**Hangzhou, Zhejiang 311121 (CN)**
• **ZHAO, Zhenyu**
**Hangzhou, Zhejiang 311121 (CN)**

(74) Representative: **Viering, Jentschura & Partner mbB**
**Patent- und Rechtsanwälte**
**Am Brauhaus 8**
**01099 Dresden (DE)**

(54) **POSITION RECOGNITION METHOD, APPARATUS AND SYSTEM, AND DEVICE AND STORAGE MEDIUM**

(57)     A position recognition method, apparatus and system, a device and a storage medium are provided. The position recognition method is applied to the position recognition apparatus, and the apparatus comprises: a power supply system, a sampling resistor and a target device, wherein the sampling resistor is connected in series to a power supply path in the power supply system, and the target device is mounted in the power supply system. The method comprises: collecting (202), by the target device, a changed voltage signal in the power supply system, processing the changed voltage signal, and sending a processing result to a server, wherein the processing result includes a voltage change node; and determining (204), by the target device, a target position according to feedback information from the server.

collecting, by the target device, a changed voltage signal in the power supply system, processing the changed voltage signal, and sending a processing result to a server — 202

determining, by the target device, a target position according to feedback information from the server — 204

**FIG. 2**

EP 4 407 510 A1

**Description**

The present application claims priority to Chinese patent application No. 202111116898.5, filed on September 23, 2021 and entitled "POSITION RECOGNITION METHOD AND APPARATUS", which is incorporated herein by reference in its entirety.

**TECHNICAL FIELD**

Embodiments of this specification relate to the field of computer technology, and in particular to a position recognition method. Meanwhile, one or more embodiments of this specification relate to a position recognition apparatus, a computing device, and a computer-readable storage medium.

**BACKGROUND**

An electronic shelf label (ESL) is an electronic display apparatus placed on a shelf to replace a paper shelf label and display commodity information such as the price, name, and origin of a product. The electronic shelf label may receive shelf label information issued by a server and display commodity information in the shelf label information on its display screen, which reduces the cost of changing commodity information on paper shelf labels and improves update efficiency.

In the prior art, an associated relationship between electronic shelf labels and shelf power supply rails may be established in advance on a server, and then an electronic shelf label is issued to the corresponding shelf power supply rail. However, if the position of an electronic shelf label is changed during use, for example, it is moved from one shelf to another, or moved from a first layer to a third layer of one and the same shelf, the server cannot well locate the position of the electronic shelf label.

Thus, how to improve the positioning precision of ESL to make its positioning function not affected by a position change is the primary problem to be solved at present.

**SUMMARY**

In view of this, an embodiment of this specification provides a position recognition method. Meanwhile, one or more embodiments of this specification relate to a position recognition apparatus, a computing device, and a computer-readable storage medium, so as to solve the technical defects existing in the prior art.

According to a first aspect of the embodiments of this specification, a position recognition method is provided, the method applied to a position recognition apparatus comprising: a power supply system, a sampling resistor and a target device, wherein the sampling resistor is connected in series to a power supply path in the power supply system, and the target device is mounted in the power supply system; the method comprises:

collecting, by the target device, a changed voltage signal in the power supply system, processing the changed voltage signal, and sending a processing result to a server, wherein the processing result includes a voltage change node; and

determining, by the target device, a target position according to feedback information from the server.

According to a second aspect of the embodiments of this specification, a position recognition apparatus is provided, comprising a power supply system, a sampling resistor and a target device, wherein the sampling resistor is connected in series to a power supply path in the power supply system, and the target device is mounted in the power supply system.

The target device is configured to collect a changed voltage signal in the power supply system, process the changed voltage signal, and send a processing result to a server, wherein the processing result includes a voltage change node.

The target device is configured to determine a target position according to feedback information from the server.

According to a third aspect of the embodiments of this specification, a position recognition system is provided, comprising a shelf power supply rail, an electronic shelf label and a server, wherein the electronic shelf label is mounted on the shelf power supply rail, the system comprises:

The electronic shelf label is configured to collect a changed voltage signal of the shelf power supply rail, process the voltage signal, and send a processing result to the server.

The server is configured to perform similarity comparison between the processing result and a preset array corresponding to the shelf power supply rail to determine feedback information, and send the feedback information to the electronic shelf label, wherein the feedback information is a target power supply rail determined from the power supply rail.

The electronic shelf label is further configured to receive the feedback information, and determine a position in the shelf power supply rail based on the feedback information.

According to a fourth aspect of the embodiments of this specification, a computing device is provided, comprising a memory for storing computer-executable instructions, and a processor for executing the computer-executable instructions that, when executed by the processor, implement the steps of the position recognition method described above.

According to a fifth aspect of the embodiments of this specification, a computer-readable storage medium is provided, which stores computer-executable instructions that, when executed by a processor, implement the steps of the position recognition method described above.

According to a sixth aspect of the embodiments of this specification, a computer program is provided, wherein when the computer program is executed in a computer, the computer is instructed to execute the steps of the position recognition method described above.

In the position recognition method and apparatus provided in the embodiments of this specification, the position recognition method is applied to a position recognition apparatus comprising a power supply system, a sampling resistor and a target device, wherein the sampling resistor is connected in series to a power supply path in the power supply system, and the target device is mounted in the power supply system. The method comprises: collecting, by the target device, a changed voltage signal in the power supply system, processing the changed voltage signal, and sending a processing result to a server, wherein the processing result includes a voltage change node; and determining, by the target device, a target position according to feedback information from the server.

Specifically, in the position recognition method, by connecting the sampling resistor in series to a power supply path in the power supply system, and mounting the target device on a power supply rail, the target device is enabled to collect a changed voltage signal in the power supply system in real time, and process and convert the voltage signal into a digital signal recognizable by the server, achieving that the server may determine a position of the target device based on this digital signal, achieving spatial positioning capability that meets digitalization demands at low hardware and software costs, and solving the problem of affecting the positioning function due to position adjustment to the target device.

## BRIEF DESCRIPTION OF THE DRAWINGS

FIG. 1 is a structural schematic diagram of a power supply system in a position recognition method provided in an embodiment of this specification;

FIG. 2 is a flow chart of a position recognition method provided in an embodiment of this specification;

FIG. 3 is a schematic diagram of a voltage measurement circuit for a position recognition method provided in one embodiment of this specification;

FIG. 4 is a waveform diagram of working current of a target device in a position recognition method provided in an embodiment of this specification;

FIG. 5 is a waveform diagram of voltage values recorded by a target device in a position recognition method provided in an embodiment of this specification;

FIG. 6 is a structural schematic diagram of a position recognition apparatus provided in an embodiment of this specification; and

FIG. 7 is a structural block diagram of a computing device provided in an embodiment of this specification.

## DETAILED DESCRIPTION

Many specific details will be elaborated in the following description to facilitate a full understanding of this specification. However, this specification can be implemented in many other ways different from those described here, and those skilled in the art may conduct similar extensions without going against the content of this specification. Thus, this specification is not limited by the specific embodiments disclosed below.

Terms used in one or more embodiments of this specification are only for the purpose of describing particular embodiments, and are not intended to limit one or more embodiments of this specification. Singular forms of "a/an", "the" and "this" used in one or more embodiments of this specification and the attached claims are also intended to include the plural forms, unless otherwise clearly indicated in the context. It should also be understood that the term "and/or" used in one or more embodiments of this specification refer to and include any or all possible combinations of one or more associated listed items.

It should be understood that although various information may be described employing terms such as first and second in one or more embodiments of this specification, such information should not be limited to these terms. These terms are only used for distinguishing information of the same type from each other. For example, without departing from the scope of one or more embodiments of this specification, the term "first" may also be referred to as "second", and similarly, "second" may also be referred to as "first". Depending on the context, the word "if' used here may be interpreted as "when" or "as"" or "to determine... in response to...".

First, nouns or terms involved in one or more embodiments of this specification are explained.

Electronic shelf label, or ESL for short, is an electronic display apparatus with information sending and receiving functions. The electronic shelf label is mainly applied in a supermarket, a convenience store, a pharmacy and others as an electronic label that displays price information. The electronic shelf label is generally placed on a shelf, and is an electronic display apparatus that may replace a traditional paper price label.

Power supply rail electronic shelf label is an electronic shelf label system that uses a conductive rail for power supply. The electronic shelf label is an electronic display apparatus with information sending and receiving functions, mainly applied in a supermarket, a convenience store, a pharmacy and others as an electronic label that displays price information. Placed on a shelf, it is an electronic display apparatus that may replace a traditional paper price label. Each electronic shelf label is connected to a computer database of a mall through wired or wireless networks, and displays latest commodity information on a screen of the electronic shelf label.

Automatic grouping is a method of grouping electronic shelf labels on power supply rails according to the power supply rails through a signal processing method. Automatic grouping is the foundation of ESL self-positioning. By determining a specific ESL on a certain power supply rail, a relative position relationship of the ESL on this power supply rail may be further calculated and determined, and a relative position relationship of different power supply rails on one and the same shelf and ESLs mounted thereon may be further determined. Still further, a position relationship between shelves may be calculated and obtained.

Regarding a current sampling resistor, an ESL is mounted on and powered by a power supply rail that draws power from a power strip behind a shelf through a power-drawing head, and a current sampling resistor is added to a power supply path, such that when change takes place in a working current of the ESL to which this power supply rail supplies power, a load current change of the entire power supply rail is presented in a form of voltage of the sampling resistor. Meanwhile, the sampling resistor isolates load changes in other areas of the shelf power supply system from this power supply rail, which plays a certain attenuating role.

Power supply rail electronic shelf label system is a system that uses a conductive rail to power an electronic shelf label.

ESL, as the infrastructure for digitalization in the supermarket retail industry, has been massively replicated in the industry. It is expected that by upgrading hardware and software in a simple and low-cost manner, and increasing basic digital capabilities related to ESL spatial positioning, more digitization value mining of ESL hardware will be made in retail scenarios.

ESL with Bluetooth technology is added with standard Beacon positioning signal source function. However, its promotion is difficult as it is limited by positional uncertainty brought about by position adjustment to the ESL.

In an implementation, positioning of ESL may be performed by two types of systems, i.e., an independently deployed positioning Beacon system and a positioning system that gives positioning Beacon function to an ESL at a particular position. The independently deployed positioning Beacon system generally requires at least one Beacon to be deployed within a 5-meter grid. In a supermarket scenario, disadvantages of the independently deployed Beacon system include: a separate system, independent costing, and relatively high hardware cost; one-time use, limited service life of the device, and relatively high expenses for later maintenance; mounting position being limited by on-site conditions, requiring professional deployment personnel and tool systems; and limited deployment density, and Bluetooth and fingerprint technologies generally employed to calculate a position, requiring on-site collection of fingerprint data.

Regarding the positioning system that gives positioning Beacon function to an ESL at a particular position, it needs to select an ESL fixed at a feature position point, and use a large capacity battery to broadcast standard Beacons to implement an indoor positioning system. This system also has disadvantages. For example, a position of the ESL may vary with SPT width and positional adjustment, affecting the positioning function; signal occlusion caused by change in an on-site environment will bring about an uncertain impact on positioning precision; and the ESL to which positioning function is given, as a separate type of ESL, needs to be managed by an independent management system.

On this basis, this solution achieves precise self-positioning capability within a range of the ESL power supply rail through the power supply rail design and ESL software and hardware design, giving the ESL the capability of positioning an anchor node.

In this specification, a position recognition method is provided. Meanwhile, one or more embodiments of this specification relate to a position recognition apparatus, a computing device, a computer-readable storage medium, and a computer program, and each of them will be explained in detail in the following embodiments.

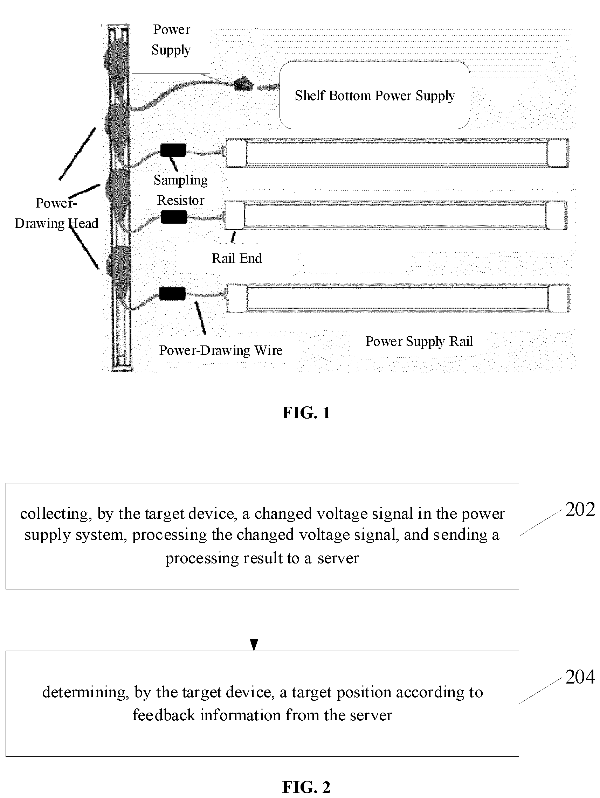

Referring to FIG. 1, there is shown a structural schematic diagram of a power supply system in a position recognition method provided according to an embodiment of this specification.

As may be known from FIG. 1, the power supply system in FIG. 1 comprises a shelf bottom power supply apparatus, a power supply rail, a power-drawing head, a power-drawing wire, a sampling resistor and a rail end. The shelf bottom power supply apparatus supplies power to the entire power supply system, the power-drawing head draws power from the shelf bottom power supply apparatus, and the power-drawing head is connected to the rail end of the power supply rail through the power-drawing wire, achieving power supply to the power supply rail. The sampling resistor is placed at a position of the power-drawing head, power-drawing wire, or rail end, and connected in series to a positive power supply path. An ESL, when mounted on a power supply rail, is powered by the power supply rail. The sampling resistor connected in series to the positive path of the power supply rail presents a load current change of the entire power supply rail in a form of voltage on the sampling resistor when change takes place to a working current of the ESL, such that the ESL may collect a voltage signal of the power supply rail.

The sampling resistor, also known as a current detection resistor, refers to a current sampling resistor and a voltage sampling resistor. For current sampling, a resistor with a small resistance value is connected in series, and an effect of which lies in that current can be precisely collected in a circuit, while for voltage sampling, a resistor with a high resistance value is connected in parallel. Such resistor is named according to usage of a product and function and effect thereof, which is thus called by engineers as a sampling resistor. What is specifically used in the embodiments of this specification is a current sampling resistor connected in series to a circuit to convert current into a voltage signal for measurement.

In order to improve the accuracy and sampling capability of the sampling circuit, it is needed to select a sampling resistor with an appropriate resistance value, which will be explained below through an embodiment.

Calculation of Resistance Value of Sampling Resistor, and Selection of Power:

effective working voltage range of an ESL powered by a power supply rail: 6-27V;

working current of the ESL powered by the power supply rail: 5-30mA;

range of the number of ESLs mounted on each ESL power supply rail: 1 to 15;

power supply voltage of the power supply rail: 12V;

maximum sampling resistance to ensure normal work of the ESL may be determined by the following way:

$$(12-6)/(15 * 0.03)=13.33 \text{ ohms};$$

power level of the sampling resistor: 2W (4 times the margin), in consideration of cost and heat dissipation issues;

actual maximum power of the sampling resistor: 0.5W;

resistance value of the sampling resistor: 2.2 ohms (E24 series), in consideration of a PSRR of the ESL with a reserved 90% pressure difference.

The embodiments of this specification do not limit selection of the sampling resistor, which may be determined in practical applications according to actual situations.

In practical applications, to make a high potential end of the sampling resistor greater than zero and a low potential end equal to zero, the sampling resistor needs to be connected in series to a power supply path at the positive pole in the power supply system. A specific implementation is described as below.

The sampling resistor is connected in series to the power supply path at the positive pole in the power supply system, wherein the power supply system comprises a power-drawing head, a power-drawing wire and a power supply rail.

Referring to FIG. 2, there is shown a flow chart of a position recognition method provided according to an embodiment of this specification, wherein the method is applied to a position recognition apparatus comprising a power supply system, a sampling resistor and a target device, wherein the sampling resistor is connected in series to a power supply path in the power supply system, and the target device is mounted in the power supply system. The position recognition method specifically comprises the following steps.

At Step 202: collecting, by the target device, a changed voltage signal in the power supply system, processing the changed voltage signal, and sending a processing result to a server, wherein the processing result includes a voltage change node.

The target device may be understood as an ESL of the above embodiment. The ESL is mounted on the power supply rail of the power supply system, and the ESL receives power supply from the power supply rail. When the sampling resistor is connected in series to the power supply path and a working current of the ESL changes, a voltage signal of the power supply rail will change as well. At this point, the ESL collects a changed voltage signal of the power supply rail, processes the changed voltage signal, and then sends a processing result to a server.

The server, also known as a service machine, is a device that provides computer services. Servers may be divided into file servers, database servers, application servers, WEB servers, etc. They perform corresponding processing according to service requests from computers, and have the abilities to undertake and guarantee services. The server in the embodiments of this specification may be understood as a server that receives a processing result of a changed voltage signal sent by the target device, and determines a position of the ESL through the processing result of this changed voltage signal. That is, when receiving the processing result of the changed voltage signal sent by the ESL, the server may analyze the processing result, and thereby determine a specific position of the ESL.

In practical applications, the target device collects a changed voltage signal in the power supply system, processes the changed voltage signal, and sends a processing result to the server; and after receiving this processing result, the server parses this processing result to determine a target position of the target device.

In specific implementations, to make a high potential end of the sampling resistor greater than zero and a low potential end equal to zero, the sampling resistor needs to be connected in series to a power supply path at a positive pole in the power supply system. A specific implementation is described as below.

The sampling resistor is connected in series to the power supply path at the positive pole in the power supply system, wherein the power supply system comprises a power-drawing head, a power-drawing wire and a power supply rail.

The target device is mounted on the power supply rail.

That is, the sampling resistor is connected in series to the positive power supply path of the power-drawing head, power-drawing wire, or power supply rail, and the target device is mounted on and powered by the power supply rail.

In addition, when the power supply system is in a power supply state, in a case where the target device meets a condition under which a voltage signal changes, the target device will collect a voltage signal of the power supply system in real time, to achieve subsequent processing of a changed voltage signal in the power supply system as collected in real time. A specific implementation is described as below.

The target device determines whether a condition under which a voltage signal changes is met, and collects a voltage signal of the power supply system if so, wherein the voltage signal of the power supply system changes as an electric current state of the target device changes.

Determining, by the target device, whether the condition under which a voltage signal changes is met comprises multiple cases, and each case will be explained below in detail.

In practical applications, when an ESL is mounted on a power supply rail, it receives power supply from the power supply rail and collects a changed voltage signal of the power supply rail in a case where the ESL meets a condition under which a voltage signal changes.

At the time of designing an ESL hardware circuit, a built-in analog-to-digital converter (ADC) of a main control chip is utilized to measure a real-time voltage signal of the power supply rail (ESL power supply contact). In practical applications, to control a voltage on the main control chip within a safe working voltage, a resistor voltage division way may be employed to divide a voltage of the power supply rail to be within a working voltage of the main control chip (e.g., 3.3V), and an overvoltage protection diode may be added to ensure that the working of the main control chip is not affected by external voltage fluctuations. A specific implementation is described as below.

Collecting, by the target device, a changed voltage signal in the power supply system comprises:

collecting, by the target device, the changed voltage signal in the power supply system through a voltage measurement circuit, wherein the voltage measurement circuit comprises an MCU-ADC, and an overvoltage protection diode is disposed in the voltage measurement circuit.

The MCU may be understood as a microprocessor, the ADC may be understood as an analog-to-digital converter, and the voltage measurement circuit may be understood as an ESL power supply rail voltage measurement circuit, which, through hardware circuit design, utilizes a built-in ADC of the main control chip to measure a voltage signal of the power supply rail.

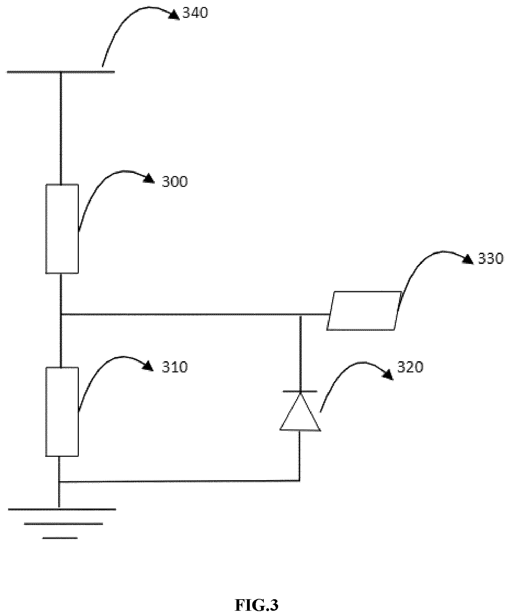

Referring to FIG. 3, there is shown a schematic diagram of a voltage measurement circuit for a position recognition method provided according to an embodiment of this specification.

The voltage measurement circuit shown in FIG. 3 may be understood as an ESL power supply rail voltage measurement circuit, comprising voltage divider resistors R1 (300), R2 (310), an overvoltage protection Zener diode (320), and an input interface (330) to an MCU-ADC of an ESL.

Voltage divider resistors R1 (300) and R2 (310) divide a 12V power supply rail voltage (340) to ensure that a voltage of R2 (310) is below 2V, and a D1 overvoltage protection Zener diode (320) is connected in parallel to voltage divider resistor R2 (310) to ensure that an input voltage of MCU-ADC (330) is below 3.3V Through the power supply rail voltage measurement circuit described above, when voltage of the power supply rail changes, MCU-ADC (330) may collect a voltage signal change status in real time. The embodiments of this specification do not limit selection of parameters for R1 (300), R2 (310) and overvoltage protection Zener diode (320), which may be determined according to actual cases in practical applications.

Specifically, the premise that an ESL collects a voltage signal of the power supply system through the power supply rail voltage measurement circuit is that the voltage of the power supply rail changes. Then, a problem arises that in which case the ESL meets a condition for collecting a voltage signal of the power supply system. To solve the above problem, there are several ways below in the embodiments of this specification which may determine whether an ESL meets a condition under which a voltage signal changes.

A first case is that the ESL, after receiving an operation instruction for a target component, determines that the condition under which a voltage signal changes is met. A specific implementation is described as below.

Determining, by the target device, whether the condition under which a voltage signal changes is met comprises: determining, by the target device, whether an operation instruction for a target component is received.

The target component is an internal component of the target device. That is, the condition under which a voltage signal changes may be met after an operation is performed for the target component of the target device, for example, a component with relatively high energy consumption, a component with relatively high computational resource occupancy, and the like in the target device.

In practical applications, in a case where any operation is performed for a component with relatively high energy consumption or relatively high computational resource occupancy in the target device, this will enable a voltage of the entire power supply rail to change. A specific implementation is described as below.

Determining, by the target device, whether an operation instruction for a target component is received comprises:

receiving a shutdown instruction for the target component in a case where the target device determines that the target component is a component with energy consumption greater than or equal to a preset energy consumption threshold; or

receiving an instruction to reduce computational resource occupancy for the target component, an instruction to reduce operating main frequency for the target component, or an instruction to reduce power consumption for the target component, in a case where the target device determines that the target component is a processor.

The preset energy consumption threshold may be set according to practical applications, and the embodiments of this specification do not make any limitation of this.

Specifically, in a case where energy consumption of the target component in the target device is greater than or equal to the preset energy consumption threshold, and in a case where a shutdown instruction is received for this target component, it may be determined that the target device meets the condition under which a voltage signal changes.

While in a case where the target component is a processor, it may be determined that the target device meets the condition under which a voltage signal changes, in a case of receiving an instruction to reduce computational resource occupancy for the target component, an instruction to reduce operating main frequency for the target component, or an instruction to reduce power consumption for the target component.

For example, upon receiving a shutdown instruction for a display component, change in its own working current of an ESL is controlled by reducing energy consumption of the ESL, thereby determining that it meets the condition under which a voltage signal changes.

In a case where the target component is the processor of the target device, in a case where the target device receives an instruction to reduce computational resource occupancy for the target component, an instruction to reduce operating main frequency for the target component, or an instruction to reduce power consumption for the target component, change in its own working current of an ESL is controlled by reducing the computational resource occupancy, operating main frequency, and power consumption of the ESL, thereby determining that it meets the condition under which a voltage signal changes.

The above determination methods of whether the target device meets the condition under which a voltage signal changes belong to software methods. Explained below is how to control changes in working current of an ESL through hardware methods, thereby determining that the target device meets the condition under which a voltage signal changes. A specific implementation is described as below.

The above operation instructions for the ESL all belong to software methods. Next, how to control working current of the ESL through hardware methods will be explained.

A second case is that by determining whether an IO interface of a microcontroller unit is externally connected to a ground leakage resistor, the ESL determines that the condition under which a voltage signal changes is met. A specific implementation is described as below.

Determining, by the target device, whether the condition under which a voltage signal changes is met comprises: determining, by the target device, whether an IO interface of a microcontroller unit is externally connected to a ground leakage resistor.

Specifically, the target device may determine whether working current of the ESL changes by determining whether the IO interface of the microcontroller unit is externally connected to a ground leakage resistor, thereby determining that a voltage signal changes.

The microcontroller unit may be understood as a central processing unit of the target device. In an embodiment of this specification, the microcontroller unit may be an MCU of an ESL.

Specifically, the IO interface of the MCU of the ESL may be controlled to work at a high level by externally connecting a ground leakage resistor at the IO interface. At this point, within the maximum working current limit (e.g., 20mA) of the IO interface, control of its own current of the ESL is achieved, thereby determining that the condition under which a voltage signal changes is met.

A third case is that it may also be determined that the condition under which a voltage signal changes is met by determining whether a preset voltage signal collection node is reached. A specific implementation is described as below.

Determining, by the target device, whether the condition under which a voltage signal changes is met comprises: determining, by the target device, whether a preset voltage signal collection node is reached, wherein the voltage signal collection node is determined by the target device according to a media access control position within a preset time.

The preset voltage signal collection node is determined by the target device based on a media access control address within a preset time, and the preset time may be set according to practical applications, which will not be repeated here.

In specific implementations, the media access control address of the target device is a MAC address of an ESL. The ESL may control itself to work in a particular working current state according to a certain random time period selection method within 1 minute after it is powered on. A specific implementation is described as below.

According to known data of ESL working current in different states, such as in state A of full power, current is 30mA, and in state B of black screen and no communication, current is 5mA. The ESL is controlled to work in A working state within a certain determined random time slice, and to work in B working state at other times. By taking the MAC address of the ESL as a random method, with the last byte of the MAC address being a decimal number X, the ESL may be configured to enter the A working state after startup, enter the B working state at X/5 seconds, and return to the A state at X/5+8 seconds. In this way, each ESL will enter the B state of black screen and no communication once within 60 seconds after startup.

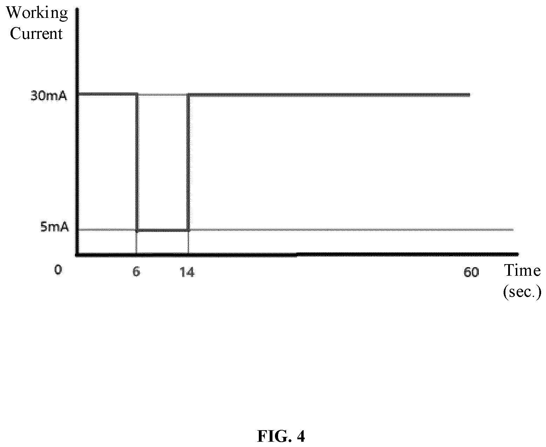

Referring to FIG. 4, there is shown a waveform diagram of working current of a target device in a position recognition method provided according to an embodiment of this specification.

FIG. 4 shows a waveform diagram of ESL working current, by taking the last byte of the MAC address being 0x1E as an example. According to the above solution, with a decimal number of the last byte of the MAC address being 30, the ESL is configured to enter the B working state after startup, enter the B working state after 6 seconds, and return to the A state after 14 seconds. In this way, each ESL will enter the B state of black screen and no communication within 60 seconds after startup.

State currents of different working states into which the ESL randomly enters according to a certain random method may be adjusted according to actual cases, and the number of times it enters different working states may be adjusted according to demands. The duration of entering different working states may be adjusted according to demands and be further randomized.

A fourth case is that by detecting whether an ESL is mounted to a power supply system, or whether it is removed from the power supply system, it may also be determined whether the target device meets the condition under which a voltage signal changes. A specific implementation is described as below.

Determining, by the target device, whether the condition under which a voltage signal changes is met comprises: determining, by the target device, whether the target device is mounted to the power supply system or whether the target device is removed from the power supply system.

For example, when an ESL is removed by a user from a power supply rail or mounted by the user on the power supply rail, another ESL on one and the same power supply rail may determine whether the target device meets the condition under which a voltage signal changes.

In an embodiment of this specification, when an ESL is mounted to or removed from a certain power supply rail, changes to working current of other ESLs on one and the same power supply rail will be caused, thereby meeting the condition under which a voltage signal changes. At this point, it is determined by other ESLs on one and the same power supply rail that the voltage signal of the power supply rail changes.

In addition, after determining that the target device meets the condition under which a voltage signal changes by the above way, the voltage signal of the power supply rail may be collected at a preset sampling rate within a preset time period. A specific implementation is described as below.

Collecting, by the target device, a changed voltage signal in the power supply system comprises:
collecting, by the target device, the changed voltage signal in the power supply system at a preset sampling rate within a preset time period.

The preset time period may be understood as a time period from startup of an ESL to a time set by a user; and the preset sampling rate may be understood as a frequency at which the ESL collects voltage signals.

For example, within a time period from startup of an ESL to 60 seconds, the ESL collects a voltage state of the power supply rail at a sampling rate of 100 Hz, and then each ESL may collect voltage signals at 6,000 sampling points. The embodiments of this specification do not limit selection of the preset time period or sampling rate, and specific applications may be set according to actual demands.

Collection of a changed voltage signal in the power supply system is performed in a case where the target device meets a condition under which a voltage signal changes. After the collection, the target device needs to process the collected changed voltage signal, so as to send the processed signal to a server for determining a position of the target device. Specific processing of a changed voltage signal may be implemented by the following way.

The processing the changed voltage signal comprises:
performing, by the target device, filter processing for the voltage signal to obtain a filtered voltage signal sequence, and convert the voltage signal sequence into a two-dimensional array.

Specifically, the filter processing may be understood as filtering of noise signals in the collected voltage signals.

In practical applications, within the time period from startup of an ESL to 60 seconds, the ESL collects a voltage state of the power supply rail at a sampling rate of 100 Hz, and then each ESL collects voltage signals $Y_n$ of a total of 6,000 sampling points. After voltage signals $Y_n$ are collected, a median filtering method is used, with a window of 11 points, to perform filter processing for collected voltage signals $Y_n$ of 6,000 sampling points. According to a reasonable pulse voltage step of the power supply rail: DV=2.2 ohms*0.03A*(2 ohms/12 ohms)=0.011 V, a derivative of voltage signal $Y_n$ is taken to obtain $K_n$, and by setting an edge detection threshold Gate=11 mV (corresponding to 25mA), a sequence $STEP_n$ is obtained.

After sequence $STEP_n$ of the voltage signal is calculated according to the above solution, since an error may possibly exist in data obtained in actual sampling and calculation, it is necessary to perform normalization processing for the data in order to remove time noise generated by edge detection.

A specific implementation of the normalization processing is to take a first edge point (e.g., 6) as a starting point, and use 2 seconds and 8 seconds as normalized integer division operators to achieve denoising processing of the data and improve the accuracy of the data.

Specifically, after the collected data is denoised according to the above, it needs to be sent to a server. However, considering that ESL sends data wirelessly, which means that a bandwidth for sending the data is limited, it needs to perform compression processing for the data.

In an embodiment of this specification, a specific implementation of the compression processing is to extract a feature compression sequence $STEP_n$, only record a time point when a signal undergoes a jump and voltage values before and after the jump, and use a two-dimensional array IDATA to record the sequence $STEP_n$.

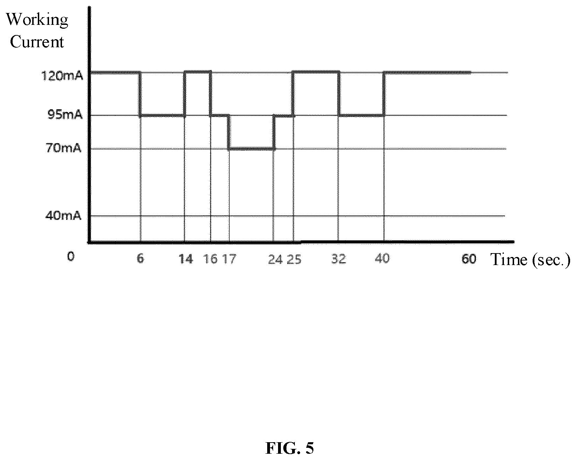

Referring to FIG. 5, there is shown a waveform diagram of voltage values recorded by a target device in a position recognition method provided according to an embodiment of this specification.

As can be known from FIG. 5, it shows a waveform diagram of multiple time points recorded by ESL when a signal undergoes a jump and voltage values before and after the jump. Then, according to the sequence $STEP_n$ in the embodiment shown in FIG. 5, its two-dimensional array is:

$$\text{IDATA} = \begin{bmatrix} 120 & 95 & 120 & 95 & 70 & 95 & 120 & 95 & 120 \\ 6 & 14 & 16 & 17 & 24 & 25 & 32 & 40 & 60 \end{bmatrix}$$

The first row records current values, and the second row records time points when changes occurred.

After the voltage signal is filtered and denoised, the accuracy of the sampled data is improved, and after compression processing, the transmission speed of sending the sampled data is improved.

After the collected voltage signal has been processed, it needs to be sent to a server. A specific implementation is described as below.

Sending a processing result to a server comprises:
sending, by the target device, the two-dimensional array to a server through Bluetooth, and receiving feedback information determined by the server after similarity comparison between the two-dimensional array and a preset array corresponding to the power supply rail, wherein the feedback information is a target power supply rail determined from the power supply rail.

In specific implementations, the target device sends the two-dimensional array to a server through Bluetooth or other ways. After the server obtains this two-dimensional array (IDATA), it performs categorization processing for this two-dimensional array according to voltage change nodes to obtain different types of array sets, and then compares each array set with preset position information to determine a position of the target device.

For example, after receiving IDATA information collected by ESLs through Bluetooth, the server first performs categorization processing for signals of the ESLs based on the number of jumps, then employs relevance calculation for ESL signals with the same number of jumps, compares IDATA information of each ESL, and classifies ESLs with the same ESL signal onto one and the same power supply rail.

In addition, when each ESL generates one jump, making it difficult to categorize all ESLs onto corresponding power supply rails, the number of jumps may be increased to enrich features contained in jump information and reduce the difficulty of categorization.

In practical application scenarios, voltage signal arrays of all power supply rails are prestored in a cloud server. After the cloud server receives IDATA information collected by an ESL through Bluetooth, it performs similarity comparison between the collected IDATA information and the voltage signal array of each power supply rail prestored in a database, to determine a power supply rail corresponding to a voltage signal array with the highest similarity to the IDATA information collected by the ESL, and sends information of this power supply rail (e.g., a position of the power supply rail) as the feedback information to the ESL.

At Step 204: determining, by the target device, a target position according to feedback information from the server.

Specifically, after categorizing the processing result, the server sends feedback information (i.e., position information of the ESL) to the target device, thereby determining a position of the target device.

In the position recognition method provided in the embodiments of this specification, the sampling resistor is connected in series to a power supply path in the power supply system, the target device is mounted on the power supply rail. Current change information of any target device on this power supply rail is reflected on voltage change information of the entire power supply rail, a voltage signal of the power supply system is collected and processed, and a processing result is sent to a server. The server, after obtaining the processing result, determines a position of the target device. Spatial positioning capability that meets digitalization demands at low hardware and software costs is achieved, the problem of affecting the positioning function due to position adjustment to the target device is solved, the problem of an uncertainty impact on positioning precision brought about by signal occlusion caused by changes in the on-site environment is solved, equipment investment and maintenance investment in building positioning capabilities of stores are reduced, precise self-positioning capability within a range of the ESL power supply rail is achieved by means of deployment density of power supply rails and ESLs, timely updating of an ESL position when change occurs in the ESL position is ensured, and normal maintenance of the positioning function is ensured.

In addition, the position recognition method provided in the embodiments of this specification, when applied to specific scenarios such as a supermarket or a store, may cut back on equipment investment and maintenance investment in building positioning capabilities of shores by means of existing power supply rails' capabilities of powering an ESL system; achieve high-precision indoor positioning by means of deployment density of power supply rails and ESLs; and make a minimal increase in hardware costs (a power supply rail sampling resistor and an ESL division voltage detection circuit), give the ESL the self-positioning capability, ensure timely updating of an ESL position when change occurs in the ESL position, and ensure normal maintenance of the positioning function.

In addition, the position recognition method provided in the embodiments of this specification may be applied to a scenario of supermarkets or stores, in which the self-positioning capability of the ESL may be used. After determining the respective position of each ESL, each ESL may serve as a base station to achieve the positioning function for staff and/or customers.

In a practical application scenario, after determining the respective positions of all ESLs on shelves in a supermarket, when a designated staff member goes to Shelf A in Area A to carry out replenishment tasks, a signal sent by an ESL in Area A is received through the staff member's terminal, which may determine that the staff member has entered Area A, and thereby determine a specific position of the staff member. Specifically, power supply rails on Shelf A are known, and then by determining that the ESL sending the signal belongs to a power supply rail on this Shelf A, it may be determined that the staff member reaches the area of Shelf A. Through the above embodiment, by means of the function of positioning the staff member by the ESL that has completed self-positioning, this may enable a manager to supervise the work of the staff member, facilitate the manager's daily management, and improve work efficiency.

In another practical application scenario, after determining the respective positions of all ESLs on shelves of a supermarket, when a customer enters the supermarket for shopping, with the customer's authorization, a signal sent by an ESL in the supermarket is received through third-party software pre-downloaded in the customer's terminal, which may determine a browsing route of the customer in the supermarket. Through the above embodiment, by means of the function of positioning customers by the ESL that has completed self-positioning, this may help to have an understanding of a frequent browsing route of each customer, thereby learning the favorite commodities of the customers, and providing each user with update and discount reminders about their favorite commodities to achieve personalized services for the customers.

Corresponding to the above method embodiments, an embodiment of this specification further provides a position recognition system comprising a shelf power supply rail, an electronic shelf label and a server, wherein the electronic shelf label is mounted on the shelf power supply rail, and the system comprises:

the electronic shelf label, configured to collect a changed voltage signal of the shelf power supply rail, process the voltage signal, and send a processing result to a server.

Specifically, the electronic shelf label is mounted on the shelf power supply rail, and receives power from the shelf power supply rail. When a voltage signal of the shelf power supply rail changes, it collects, filters, denoises and compresses the voltage signal of the shelf power supply rail, and sends the compressed voltage signal to the server in the form of an array.

The server is configured to perform similarity comparison between the processing result and a preset array corresponding to the shelf power supply rail to determine feedback information, and send the feedback information to the electronic shelf label, wherein the feedback information is a target power supply rail determined from the power supply rail.

Specifically, after receiving array data sent by the electronic shelf label, the server performs similarity comparison between the same and array data locally preset in the server. When a comparison result shows high similarity, it determines a specific position of the shelf power supply rail where this electronic shelf label is located, generates feedback information and sends it to the electronic shelf label.

The electronic shelf label is further configured to receive the feedback information, and determine a position in the shelf power supply rail based on the feedback information.

Specifically, after receiving the feedback information returned from the server, the electronic shelf label may obtain a position of the shelf power supply rail where it is located from the feedback information, thereby determining its own specific position.

In the position recognition system provided in the embodiments of this specification, by mounting the electronic shelf label on the shelf power supply rail, the electronic shelf label is enabled to collect a changed voltage signal of the shelf power supply rail, and after processing the voltage signal, a processing result is sent to the server. After obtaining the processing result, the server determines a specific position of the shelf power supply rail where the electronic shelf label is located, and sends this specific position as a feedback signal to the electronic shelf label. The electronic shelf label receives the feedback signal to determine a specific position of the shelf power supply rail where it is located, thereby achieving spatial self-positioning capability that meets digitalization demands at low hardware and software costs, solving the problem of affecting the positioning function due to position adjustment to the target device, and solving the problem of an uncertainty impact on positioning precision brought about by signal occlusion caused by changes in the on-site environment.

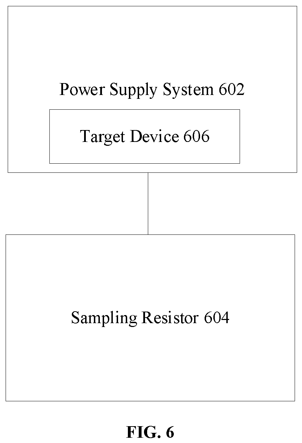

Referring to FIG. 6, corresponding to the above method embodiment, there is shown a structural schematic diagram of a position recognition apparatus provided according to an embodiment of this specification. The apparatus comprises a power supply system 602, a sampling resistor 604 and a target device 606, wherein the sampling resistor 604 is connected in series to a power supply path in the power supply system 602, and the target device 606 is mounted in the power supply system 602.

The target device 606 is configured to collect a changed voltage signal in the power supply system 602, process the changed voltage signal, and send a processing result to a server.

The target device 606 is configured to determine a target position according to feedback information from the server.

Optionally, the sampling resistor 604 is connected in series to a power supply path at a positive pole in the power supply system 602, wherein the power supply system 602 comprises a power-drawing head, a power-drawing wire and a power supply rail.

The target device 606 is mounted on the power supply rail.

Optionally, the target device 606 is configured to determine whether a condition under which a voltage signal changes is met, and collect a voltage signal of the power supply system 602 if so, wherein the voltage signal of the power supply system 602 changes as an electric current state of the target device 606 changes.

Optionally, the target device 606 is configured to collect the changed voltage signal in the power supply system 602 through a voltage measurement circuit, wherein the voltage measurement circuit comprises an MCU-ADC, and an overvoltage protection diode is provided in the voltage measurement circuit.

Optionally, the target device 606 is configured to determine whether an operation instruction for a target component is received.

Optionally, the target device 606 is configured to receive a shutdown instruction for the target component in a case where it is determined that the target component is a component with energy consumption greater than or equal to a preset energy consumption threshold.

Alternatively, the target device 606 is configured to receive an instruction to reduce computational resource occupancy for the target component, an instruction to reduce operating main frequency for the target component, or an instruction to reduce power consumption for the target component, in a case where it is determined that the target component is a processor.

Optionally, the target device 606 is configured to determine whether an IO interface of a microcontroller unit is externally connected to a ground leakage resistor.

Optionally, the target device 606 is configured to determine whether a preset voltage signal collection node is reached, wherein the voltage signal collection node is determined by the target device 606 according to a media access control position within a preset time.

Optionally, the target device 606 is configured to determine whether the target device is mounted to the power supply system 602, or whether it is removed from the power supply system 602.

Optionally, the target device 606 is configured to collect the changed voltage signal in the power supply system 602 at a preset sampling rate within a preset time period.

Optionally, the target device 606 is configured to perform filter processing for the voltage signal to obtain a filtered voltage signal sequence, and convert the voltage signal sequence into a two-dimensional array.

Optionally, the target device 606 is configured to send the two-dimensional array to a server through Bluetooth, receive the feedback information determined by the server after performing similarity comparison between the two-dimensional array and a preset array corresponding to the power supply rail, wherein the feedback information is a target power supply rail determined from the power supply rail.

In the position recognition apparatus provided in the embodiment of this specification, sampling resistor 604 is connected in series to a power supply path of power supply system 602, and target device 606 is mounted on the power supply rail, the target device 606 is enabled to collect in real time a changed voltage signal in power supply system 602, and process the voltage signal to convert the same into a digital signal recognizable by the server, such that the server may determine a position of target device 606 based on this digital signal, thereby achieving spatial positioning capability that meets digitalization demands at low hardware and software costs, and solving the problem of affecting the positioning function brought about by position adjustment to target device 606.

Described above is an exemplary solution of the position recognition apparatus in this embodiment. It should be noted that the technical solution of this position recognition apparatus belongs to one and the same concept as the technical solution of the position recognition method described above. Any details not detailed in the technical solution of the position recognition apparatus may refer to the description of the technical solution of the position recognition method described above.

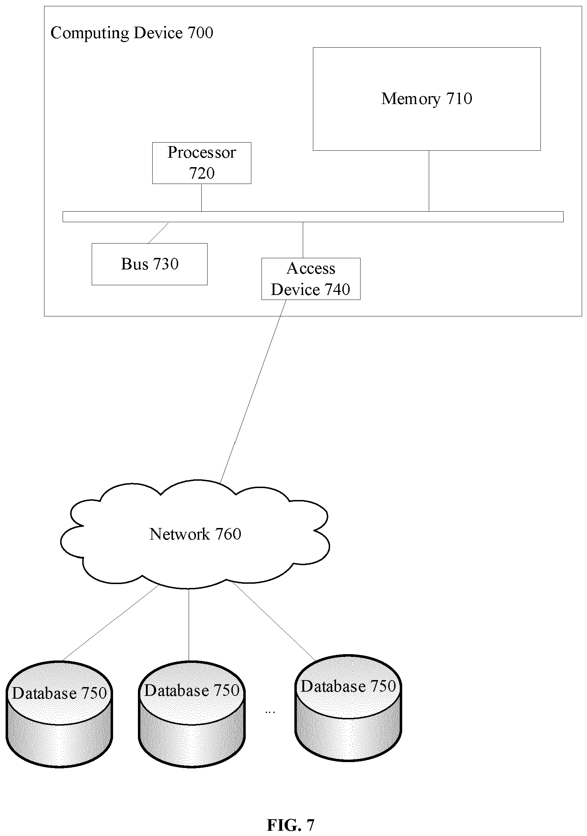

FIG. 7 shows a structural block diagram of a computing device 700 provided according to an embodiment of this specification. Components of this computing device 700 include but are not limited to a memory 710 and a processor 720. Processor 720 is connected to memory 710 through a bus 730, and database 750 is used for storing data.

Computing device 700 further comprises an access device 740 that enables computing device 700 to be in communication via one or more networks 760. Examples of these networks include Public Switched Telephone Network (PSTN), Local Area Network (LAN), Wide Area Network (WAN), Personal Area Network (PAN), or a combination of communication networks such as the Internet. Access device 740 may comprise one or more of any type of wired or wireless network interfaces (e.g., Network Interface Card (NIC)), such as an IEEE802.11 Wireless Local Area Network (WLAN) wireless interface, a Global Microwave Interconnection Access (Wi-MAX) interface, an Ethernet interface, a Universal Serial Bus (USB) interface, a cellular network interface, a Bluetooth interface, a Near Field Communication (NFC) interface, and so on.

In an embodiment of this specification, the aforesaid components of computing device 700 and other components not shown in FIG. 7 may also be connected to each other through, for example, a bus. It should be understood that the structural block diagram of the computing device shown in FIG. 7 is only for illustrative purposes and does not serve as a limitation of the scope of this specification. Those skilled in the art may add or replace other components according to needs.

Computing device 700 may be any type of stationary or mobile computing device, including a mobile computer or mobile computing device (e.g., a tablet, a personal digital assistant, a laptop, a notebook, a netbook, etc.), a mobile phone (e.g., a smartphone), a wearable computing device (e.g., a smartwatch, smart glasses, etc.), or other types of mobile devices, or a stationary computing device such as a desktop computer or PC. Computing device 700 may also be a mobile or stationary server.

Processor 720 is used for executing the following computer-executable instructions, which implement the steps of the position recognition method described above when executed by the processor.

Described above is an exemplary solution of the computing device in this embodiment. It should be noted that the technical solution of the computing device belongs to one and the same concept as the technical solution of the position recognition method described above. Any details not detailed in the technical solution of the computing device may refer to the description of the technical solution of the position recognition method described above.

An embodiment of this specification further provides a computer-readable storage medium that stores computer-executable instructions for implementing the steps of the position recognition method described above when executed by a processor.

Described above is an exemplary solution of the computer-readable storage medium in this embodiment. It should be noted that the technical solution of the storage medium belongs to one and the same concept as the technical solution of the position recognition method described above. Any details not detailed in the technical solution of the storage medium may refer to the description of the technical solution of the position recognition method described above.

Described above are particular embodiments of this specification. Other embodiments are within the scope of the attached claims. In some cases, actions or steps recorded in the claims may be executed in a different order than in the embodiments, and may still achieve the desired result. Additionally, the process depicted in the drawings does not necessarily require a particular or continuous order as shown to achieve the desired result. In some implementations, multitasking and parallel processing are also possible or may be advantageous.

The computer instructions include computer program codes, which may be in a form of source code or object code, an executable file, or some intermediate forms. The computer-readable medium may include: any entity or apparatus capable of carrying the computer program codes, a recording medium, a USB flash drive, a portable hard drive, a magnetic disc, an optical disc, a computer memory, a read-only memory (ROM), a random access memory (RAM), an electrical carrier signal, a telecommunications signal, and a software distribution medium. It should be noted that content contained in the computer-readable medium may be appropriately increased or decreased according to the requirements of legislation and patent practice in a jurisdiction. For example, in some jurisdictions, according to legislation and patent practice, a computer-readable medium does not include an electrical carrier signal or a telecommunication signal.

It should be noted that for the convenience of description, the method embodiments described precedingly are all expressed as a combination of a series of actions. However, those skilled in the art should be aware that the embodiments of this specification are not limited by the described action orders, because according to the embodiments of this specification, certain steps may proceed in other orders or at the same time. Furthermore, those skilled in the art should also be aware that the embodiments described in this specification are all preferred embodiments, and the actions and modules involved are not all definitely necessary for the embodiments of this specification.

In the above embodiments, different focuses are put in their respective descriptions. For parts not detailed in a certain embodiment, reference may be made to the relevant descriptions of other embodiments.

The preferred embodiments disclosed above are merely used to help elaborate this specification. The optional embodiments do not fully recite all the details, and thus do not limit the invention to be only the specific implementations as described. Obviously, according to the content of the embodiments of this specification, many modifications and changes may be conducted. This specification selects and specifically describes these embodiments in order to better explain the principles and practical applications of the embodiments of this specification, such that those skilled in the art can well understand and utilize this specification. This specification is limited only by the claims and their entire scope and equivalents.

## Claims

1.    A position recognition method, applied to a position recognition apparatus comprising a power supply system, a sampling resistor and a target device, wherein the sampling resistor is connected in series to a power supply path in the power supply system, and the target device is mounted in the power supply system, and the method comprises:

collecting, by the target device, a changed voltage signal in the power supply system, processing the changed voltage signal, and sending a processing result to a server; and
determining, by the target device, a target position according to feedback information from the server.

2.    The position recognition method according to claim 1, wherein the sampling resistor is connected in series to the power supply path in the power supply system, and the target device is mounted in the power supply system, comprises:

the sampling resistor is connected in series to a power supply path at a positive pole in the power supply system, wherein the power supply system comprises a power-drawing head, a power-drawing wire and a power supply rail; and

the target device is mounted on the power supply rail.

3. The position recognition method according to claim 1, wherein the collecting, by the target device, the changed voltage signal in the power supply system comprises:
determining, by the target device, whether a condition under which a voltage signal changes is met, and if the condition is met, collecting a voltage signal of the power supply system, wherein the voltage signal of the power supply system changes as an electric current state of the target device changes.

4. The position recognition method according to claim 3, wherein the determining, by the target device, whether the condition under which the voltage signal changes is met comprises:
determining, by the target device, whether an operation instruction for a target component is received.

5. The position recognition method according to claim 4, wherein the determining, by the target device, whether the operation instruction for the target component is received comprises:

receiving a shutdown instruction for the target component, in a case where the target device determines that the target component is a component with energy consumption greater than or equal to a preset energy consumption threshold; or
receiving an instruction to reduce computational resource occupancy for the target component, an instruction to reduce operating main frequency for the target component, or an instruction to reduce power consumption for the target component, in a case where the target device determines that the target component is a processor.

6. The position recognition method according to claim 3, wherein the determining, by the target device, whether the condition under which the voltage signal changes is met comprises:
determining, by the target device, whether a preset voltage signal collection node is reached, wherein the voltage signal collection node is determined by the target device according to a media access control position within a preset time.

7. The position recognition method according to claim 3, wherein the determining, by the target device, whether the condition under which the voltage signal changes is met comprises:
determining, by the target device, whether the target device is mounted to the power supply system or whether the target device is removed from the power supply system.

8. The position recognition method according to claim 2, wherein the processing the changed voltage signal, and sending the processing result to the server comprise:

performing, by the target device, filter processing for the voltage signal to obtain a filtered voltage signal sequence, and convert the voltage signal sequence into a two-dimensional array; and
sending, by the target device, the two-dimensional array to the server through Bluetooth, and receiving the feedback information determined by the server after performing similarity comparison between the two-dimensional array and a preset array corresponding to the power supply rail, wherein the feedback information is a target power supply rail determined from the power supply rail.

9. A position recognition apparatus, comprising a power supply system, a sampling resistor and a target device, wherein the sampling resistor is connected in series to a power supply path in the power supply system, and the target device is mounted in the power supply system, and

the target device is configured to collect a changed voltage signal in the power supply system, process the changed voltage signal, and send a processing result to a server; and
the target device is configured to determine a target position according to feedback information from the server.

10. A position recognition system, comprising a shelf power supply rail, an electronic shelf label and a server, wherein the electronic shelf label is mounted on the shelf power supply rail, the system comprises:

the electronic shelf label is configured to collect a changed voltage signal of the shelf power supply rail, process the voltage signal, and send a processing result to the server;
the server is configured to perform similarity comparison between the processing result and a preset array corresponding to the shelf power supply rail to determine feedback information, and send the feedback information to the electronic shelf label, wherein the feedback information is a target power supply rail determined from the power supply rail; and

the electronic shelf label is further configured to receive the feedback information, and determine a position in the shelf power supply rail based on the feedback information.

11. A computing device, comprising:

a memory and a processor;

wherein the memory is used for storing computer-executable instructions, and the processor is used for executing the computer-executable instructions that, when executed by the processor, implement steps of the position recognition method according to any one of claims 1 to 8.

12. A computer-readable storage medium, which stores computer-executable instructions that, when executed by a processor, implement steps of the position recognition method according to any one of claims 1 to 8.

**FIG. 1**

collecting, by the target device, a changed voltage signal in the power supply system, processing the changed voltage signal, and sending a processing result to a server | 202

determining, by the target device, a target position according to feedback information from the server | 204

**FIG. 2**

**FIG.3**

**FIG. 4**

**FIG. 5**

Power Supply System 602

Target Device 606

Sampling Resistor 604

**FIG. 6**

Computing Device 700

Memory 710

Processor 720

Bus 730

Access Device 740

Network 760

Database 750    Database 750    ...    Database 750

**FIG. 7**

## INTERNATIONAL SEARCH REPORT

| International application No. |
|---|
| **PCT/CN2022/118413** |

| A. | CLASSIFICATION OF SUBJECT MATTER |
|---|---|

G06K 7/10(2006.01)i

According to International Patent Classification (IPC) or to both national classification and IPC

| B. | FIELDS SEARCHED |
|---|---|

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, EPODOC, WPI, IEEE, CNKI: 电子价签, 电子货签, 位置, 定位, 电压, 电阻, 电流, 变化, 改变, 功耗, 耗能, 相似, ESL, position, location, voltage, resistance, current, change, power consumption, similar

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114004241 A (HEMA (CHINA) CO., LTD.) 01 February 2022 (2022-02-01) claims 1-12, and description, paragraphs [0043]-[0185] | 1-12 |
| X | CN 111160498 A (XIAMEN PINNACLE ELECTRICAL CO., LTD.) 15 May 2020 (2020-05-15) claims 1-10, and description, paragraphs [0035]-[0076] | 1-4, 6, 7, 9, 11, 12 |
| X | WO 2021160160 A1 (ALIBABA GROUP HOLDING LTD.) 19 August 2021 (2021-08-19) description, page 5 paragraph 1-page 9 last paragraph | 1-4, 6, 7, 9, 11, 12 |
| A | CN 111933041 A (ZHIFUBAO (HANGZHOU) INFORMATION TECHNOLOGY CO., LTD.) 13 November 2020 (2020-11-13) entire document | 1-12 |
| A | CN 113301644 A (HANSHOW TECHNOLOGY CO., LTD.) 24 August 2021 (2021-08-24) entire document | 1-12 |
| A | US 2013321385 A1 (OPTOELECTRONICS CO., LTD.) 05 December 2013 (2013-12-05) entire document | 1-12 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 October 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/118413**

| Patent document cited in search report | | | Publication date (day/month/year) | Patent family member(s) | | | Publication date (day/month/year) |
|---|---|---|---|---|---|---|---|
| CN | 114004241 | A | 01 February 2022 | None | | | |
| CN | 111160498 | A | 15 May 2020 | None | | | |
| WO | 2021160160 | A1 | 19 August 2021 | None | | | |
| CN | 111933041 | A | 13 November 2020 | None | | | |
| CN | 113301644 | A | 24 August 2021 | None | | | |
| US | 2013321385 | A1 | 05 December 2013 | JP | WO2012074056 | A1 | 19 May 2014 |
| | | | | WO | 2012074056 | A1 | 07 June 2012 |
| | | | | CN | 103238176 | A | 07 August 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111116898